# EUROPEAN PATENT APPLICATION

(11) **EP 3 889 104 A1**
(43) Date of publication of application: **06.10.2021**
(21) Application number: 19889522.9
(22) Date of filing: 29.11.2019
(51) Int. Cl.: C01B 3/34, C09C 1/48, B01J 19/08, B01J 12/00

(54) **PROCESS AND PLASMA REACTOR FOR THE PRODUCTION OF SYNTHESIS GAS**

(30) Priority: 29.11.2018 BR 102018074753
(71) Applicant: Petróleo Brasileiro S.A. - Petrobras, 20031-912 Rio de Janeiro - RJ (BR); Universidade Federal do Espirito Santo - UFES, 29075-910 Viória - ES (BR)
(72) Inventor: REIS DA COSTA LABANCA, Aurelio, 24240210 Rio de Janeiro (BR); GONÇALVES CUNHA, Alfredo, 29060040 Vitória (BR)
(74) Representative: Regimbeau
(86) International application number: PCT/BR2019/050510
(87) International publication number: WO 2020/107090

(57) **Abstract**

The present invention describes a plasma reactor for processing natural gas and/or light hydrocarbons, including biomethane and biogas, with a plasma torch that does not require the use of cathode shielding gas (shielding gas), as well as a process for reforming using a plasma reactor for the production of synthesis gas and carbonaceous materials from natural gas and/or light hydrocarbons.

## Description

### FIELD OF PRESENT INVENTION

The present invention refers to a process and reactor for producing synthesis gas. More specifically, the present invention suggests a reactor that makes use of electrical discharges and carbon dioxide and a reform process that uses this reactor for the production of synthesis gas with high heat power and nanostructured carbon.

### BACKGROUND OF THE PRESENT INVENTION

Hydrogen and hydrogen-rich gases, called synthesis gas, are produced on a large scale for use in the refining industry, in the production of ammonia, methanol, liquid hydrocarbons from the "Fischer-Tropsch" process, in several petrochemical processes and hydrogenation processes of solvents, paraffins and products used in the food industry. To obtain it, some processes of hydrocarbon reform (such as natural gas and/or other light hydrocarbons) can be used, such as, for example, steam reform, partial oxidation, autothermal reform or dry reform. Currently, the process of steam reforming of natural gas (methane and/or other light hydrocarbons) is the most used method for the production of hydrogen on an industrial scale.

However, such processes have parameters that can render the process expensive or impair the process, such as the need to purchase and/or manufacture, regeneration, replacement and disposal of catalysts suitable for each reform process, as well as the use of water (in the case of steam reform), or oxygen (in the case of autothermal or partial oxidation reform). Some processes, in the latter case, use atmospheric air as a source of oxygen, generating synthesis gas with low heat value, in view of the high nitrogen content present in air. On the other hand, despite producing synthesis gas of medium heat value, the use of pure oxygen would make the process even more expensive, due to the need for an air separating unit to supply oxygen to the process.

Thus, it is necessary to find processes for the production of synthesis gas and nanostructured carbon by reforming natural gas (and/or other light hydrocarbons) that can be carried out dry, but without the use of catalysts or diluents gases, or even without the use of air separating units for oxygen supply into the generation of synthesis gas of medium heat power.

Plasma processes are a reliable alternative for the generation of synthesis gas with high heat value. The basic objective of electric arc reactors in the region of the thermal arc, also known as thermal plasma, is the effective transformation of electrical energy into thermal energy, which would make the reform process feasible, since the torches comprise the following characteristics:
- High arc temperature (over 11,000K);
- High efficiency of conversion of electric energy into thermal energy, reaching 95%;
- Use of any gases: oxidizing, neutral or reducing;
- High enthalpy of plasma flow;
- High power density;
- Small dimensions;
- High thermal conductivity of plasma flow.

In this sense, the document CEVOLANI et al., In "Enriquecimento de gas natural veicular via plasma de dioxido de carbono", 6° Congresso Brasileiro do Carbono - Carbono 2015, Resumo - P55 (2015), also deals with the use of thermal plasma in the processing of the gases made up by VNG and carbon dioxide, however it is only aimed to enriching VNG, that is, adding a reduced percentage of hydrogen into VNG for use in engines only, whereas in present invention there is no "enrichment" of gas (VNG, in this case) and yes, practically all hydrogen atoms existing in the molecules of the processed charge will be converted into molecular hydrogen (H2), the gases obtained by present invention can be used in fuel cells, differently from the document cited herein above, and also in engines.

On the other hand, the document CUNHA, A.G, e MAROTTA, A., in "Low erosion rate of zirconium cathode in a plasma torch", IEEE International Conference on Plasma Science, 2C8 (1989) pp. 66-67. DOI: 10.1109 / PLASMA. 1989.166038 seeks to solve the problem of high rates of cathode erosion in plasma torches. In this work, the authors reveal the study of zirconium cathodes, in which, upon reacting with air, there was formation of a protective film of ZrO₂ and ZrN on the cathode surface, a film that had good refractory and electro-emission properties. It was found that, in order to decrease the erosion rate, it is necessary to keep the surface temperature of the zirconium cathode as low as possible, improving cooling. However, the presence of carbon in the reaction medium produces zirconium carbide, which deteriorates the cathode. In the present invention, neither air nor oxygen in air are used.

The document CHEN, L., PERSHIN, L., e MOSTAGHIMI, J., in "A New Highly Efficient High-Power DC Plasma Torch", IEEE TRANSACTIONS ON PLASMA SCIENCE, VOL. 36, NO. 4, AUGUST 2008, deals with a plasma torch that is operated with a mixture of carbon dioxide and hydrocarbons, for example, methane (main component of natural gas). According to the authors, the enthalpy and thermal conductivity of the CO₂ plasma with CH4 is considerably higher than in plasma with argon, usually used as a protective gas for the cathode and limiting the thermal efficiency of the process. However, the configuration applied in this document does not allow much flexibility in the amount of methane applied, due to the instability generated in the plasma. In addition, methane must be present in the cathode region for carbon replacement.

Thus, there are no reports in the state of the art that anticipate a reactor powered by carbon dioxide plasma and a reform process that uses this reactor for the production of synthesis gas with high heat power and nanostructured carbon.

### SUMMARY OF PRESENT INVENTION

The present invention refers to the production of synthesis gas with high heat value and nanostructured carbon.

A first objective of the present invention is to develop a plasma reactor for processing natural gas and/or light hydrocarbons with a plasma torch that does not require the use of cathode shielding gas (shielding gas).

A second objective of the present invention is to develop a reform process that uses a plasma reactor for the production of synthesis gas from natural gas and/or light hydrocarbons.

In order to achieve the objectives described above, the present invention proposes a reactor powered by carbon dioxide plasma and torch containing zirconium cathode, as well as a dry reform process using this reactor.

The process according to present invention generates carbon monoxide and hydrogen, also aiming at enriching natural gas with hydrogen gas by at least 10%. The natural gas thus enriched would enable the operation of an internal combustion engine with poor mixtures (higher percentage of air in relation to the fuel than usual), presenting a variety of positive aspects, among them, the reduction of emissions of this engine and the improved combustion efficiency.

Advantageously, the process according to the present invention obtains—high-purity and also nanostructured carbon (graphene and other carbonaceous materials), which has high added value and great industrial demands. Commercially known as *Carbon Black* or carbon black, carbon has the tire industry as its main market and its worldwide demand is in the order of 10 million tons per year. In addition, the carbon from plasma pyrolysis is one of the purest known and, therefore, it can be used in several noble applications, for example, in the production of special steels.

The proposed configuration for the reactor of the present invention eliminates the need for cathode shielding gas (shielding gas), thus generating synthesis gas with a higher CO and H2 content, of the highest heat power among all synthesis gas generation technologies.

Due to the set of characteristics of the present invention (namely, the thermal and catalytic effect provided by the plasma arc generated, configuration and types of materials used in the electrodes, the geometry of the plasma torch, the form of gas injection, the variation of power of the plasma torch, the variation of gases and also the proportions between the gases used), the need for catalysts in the reaction, as well as for water in the generation of hydrogen gas, is eliminated. The use of CO₂ as a plasma gas solves problems in maintaining plasma discharge and technical-operational difficulties in the power source, also eliminating the need to generate plasma gas, and then use it in the process itself, as in the case the use of hydrogen as a plasma gas. In addition, the CO₂, an industrial and process gas, which is easily obtained, has the advantage of being non-contaminating or diluent of the synthesis gas generated, as it is converted into CO, in addition to being simpler to ionize than hydrogen gas.

The present invention can be applied in the chemical or synthetic fuels industry from the CO and H2 gases generated, as well as in hydrogen generating units, with the use of CO and the sensible heat of the integrated process. The proportions between CO and H₂ can be controlled by the proportions of the reactant gases (natural gas and/or other light hydrocarbons and CO₂). The formation of carbon in solid state can also be controlled.

These objectives and other advantages of the present invention will be more evident from the description that follows and the accompanying drawings.

### BRIEF DESCRIPTION OF THE FIGURES

The detailed description presented below refers to the attached figures, which:

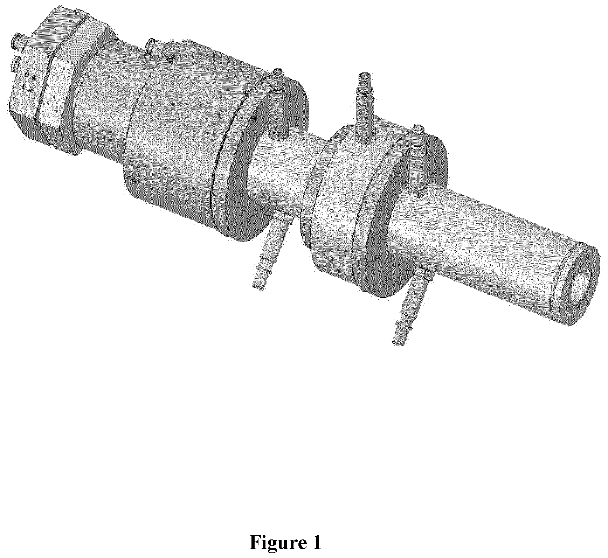

Figure 1 depicts the electric arc torch used, according to the present invention.

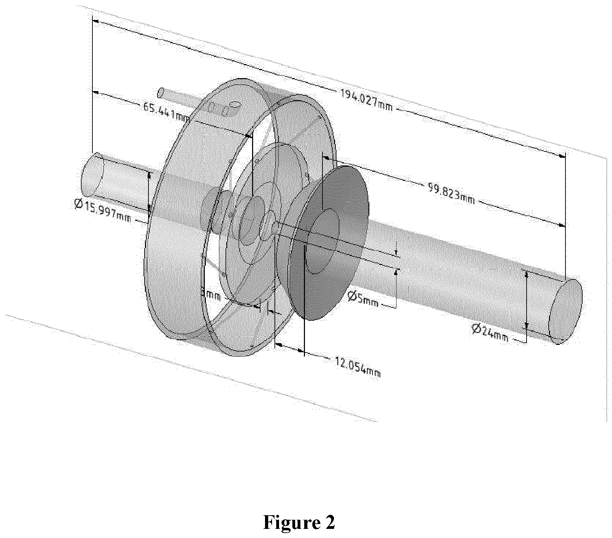

Figure 2 depicts the internal dimensions of the plasma torch according to the present invention.

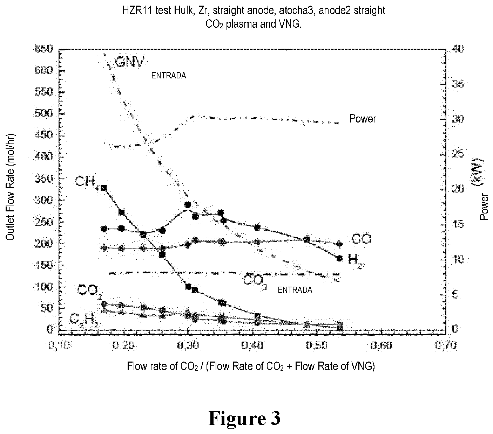

Figure 3 depicts a graph with the output flow rates for the several gases resulting from the reaction of VNG with a CO₂ plasma in the HZR11 test, where, mainly, the flow rate remained fixed the flow rates of CO₂ varied and the VNG flow rate varied.
Figure 4 depicts a graph of selectivity for dry reform products in the HZR11 test, where the CO₂ flow rate was kept fixed and the VNG flow rate was varied.
Figure 5 represents a graph with the output flow rates for the several gases resulting from HZR13 test, where the electric arc current and the CO2 flow rate was fixed and the VNG flow rate was varied.
Figure 6 depicts a graph with the results of conversion of VNG into H₂ and abatement of CO₂ from initial gas, which refers to the formation of carbon in solid phase and which was extracted from the VNG, for the HZR13 test, where the current of the electric arc, the flow of CO₂ were kept fixes and the flow of VNG was varied.
Figure 7 depicts a graph with the results of energy yields for H₂, CO and C₂H₂ of HZR13 test, where the electric arc current, the flow rate of CO₂ was kept fixes and the flow rate of VNG was varied.
Figure 8 depicts a graph of selectivity for the reform products in the HZR13 test, where the electric arc current, the flow rate of CO₂ was fixed and the VNG flow rate was varied.
Figure 9 depicts a graph with the electrical consumption, electrical energy consumed in the plasma per mol of H₂ and CO generated in the HZR13 test, where the electric arc current and the CO₂ flow rate were fixed and the flow of VNG was fixed.
Figure 10 depicts a graph of the percent conversion of the reagents (CNG and CO2) in CO, H₂ and carbon for the HZR13 test, where the current of the electric arc and flow rate of CO₂ were fixed and the flow of VNG was varied.
Figure 11 depicts a graph with the output flow rates for the several gases resulting from the reaction of VNG with a CO₂ plasma in the HZR13 test, where the flow rates of VNG and CO₂ were fixed, and the plasma current was varied.
Figure 12 depicts a Graph with the results of the conversion of VNG into H₂ and CO₂ abatement in the HZR13 test, which refers to the formation of carbon in solid phase and which was extracted from VNG, where the flow rates of VNG and CO₂ were fixed, and the plasma current was varied.
Figure 13 depicts a graph with the results of energy yields for H₂, CO and C₂H₂ of HZR13 test, where the flow rates of VNG and CO₂ were fixed, and the plasma current was varied.
Figure 14 depicts a graph of selectivity for the products in the HZR13 test, where the flow rates of VNG and CO₂ were fixed, and the plasma current was varied.
Figure 15 depicts a graph with the electrical consumption, electrical energy consumed in the plasma mol of H₂ of CO and carbon generated in the HZR13 test, where the flow rates of VNG and CO₂ were fixed, and the plasma current was varied.
Figure 16 depicts a graph of the percent conversion of reagents into CO, H₂ and carbon for the HZR13 test, where the flow rates of CNG and CO₂ were fixed, and the plasma current was varied.

### DETAILED DESCRIPTION OF PRESENT INVENTION

The present invention refers to a reactor powered by carbon dioxide plasma and a plasma torch containing electrodes for processing natural gas and/or light hydrocarbons.

The present invention also refers to a reform process utilizing a carbon dioxide plasma reactor and plasma torch containing electrodes for processing natural gas and/or light hydrocarbons, including biogas, aiming the production of synthesis gas and solid carbon, preferably nanostructured, from natural gas and/or light hydrocarbons.

Within the scope of the present invention, plasma torches have the following construction elements
- Electrodes: cathode and anode;
- A tube for the passage of gas, which can be housed in the anode in the case of a not transferred arc;
- A gas inlet chamber (vortex chamber);
- Arc stabilization system (usually in a vortex);
- Arc rotation system (magnetic or vortex);
- Cooling system of the electrodes.

According to present invention, the torches show an anode selected from the group consisting of straight anode, conical anode or step anode. In a preferred mode, the torches have a straight or step anode.

According to present invention, gas injection can occur in the cathode or anode region. Preferably, CO₂ is injected into the cathode region, which first causes CO₂ ionization. Also, preferably, CH₄ is injected at the anode outlet, which allows:
- injecting any flow of CH₄ without affecting the stability of the electric arc;
- obtaining high percent conversion of CO₂ (from 75% to 100%, preferably between 90 and 100%), regardless of the CH₄ flow rate applied in the process;
- obtaining conversion from 75% to 100%, preferably between 90 and 100% of CO₂ + CH₄ into 2H₂ + 2CO.

In one embodiment of present invention, the diameter of the anode and/or cathode can be in the range between 2 mm and 100 mm, preferably between 5 and 50 mm.

Within the scope of present invention, cathode as described in the prior art can be used . Preferably, cathodes selected from the group consisting of copper and zirconia are used.

According to present invention, the power to be used in the plasma can vary between 1 to 6,000 kW, preferably between 20 and 200 kW.

To carry out the process according to present invention, gas flow rates in the range between 2 and 60,000 mol/hr are used, preferably between 10 and 2000 mol/hr are used.

The following description will start from preferred embodiments of present invention. As will be apparent to any person skilled in the art, the present invention is not limited to those particular embodiments.

### Examples:

For a better understanding of the processes that took place inside the plasma torches, the Computational Fluid Dynamics (CFD - *Computational Fluid Dynamics*) simulation resource was used. The rendered showed a good energy efficiency in the production of hydrogen, however, with low conversion of CO₂. The electric arc thermal plasma torch achieved superior results in converting natural gas into CO₂ plasma, in terms of efficiency and scale.

### HZR11 test

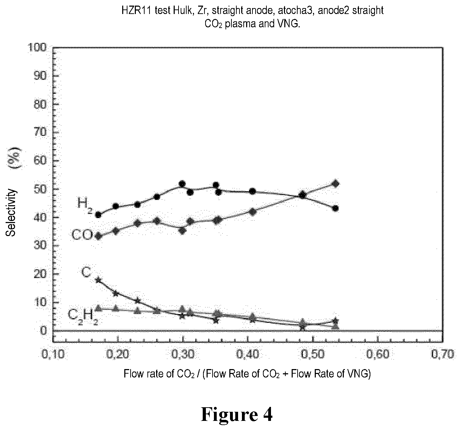

In order to observe the effects of gas confinement, the second anode had its internal diameter reduced. In this test, the fixed flow rate of 131 mol/hr for CO₂ was kept, while the flow rate of VNG was varied from 112 to 639 mol/hr. The current of the electric arc was kept constant at 103 A, but the power decreased with the increase in the flow rate of VNG, due to the small diameter of the second anode that caused an increase in pressure at the output of the first anode. The decrease in the diameter of the second anode, in addition to causing a greater pressure drop, increases the temperature of the gases passing through it. This fact is reflected in the CO flow rate that decreases with the increase in VNG flow rate. This behavior can be seen in the selectivity graph shown in Figure 4.

### HZR13 test

As the decrease in the diameter of the second anode reduced the energy yield in the production of H₂, in the HZR13 test, the diameter returned to 25 mm. As a new attempt to increase the plasma temperature, in this test the diameter of the first anode was decreased. The results of this test were divided into two groups. Firstly, the procedure was the same as that of HZR11 test, where the CO₂ flow rate was fixed at 135 mol/hr, making the VNG flow rate vary to a constant current of 103 A. In this case, there was no decrease in power due to the increase in the flow rate of VNG. In the second group, VNG flow rates were set at 312 mol e/hr and CO₂ at 135 mol/hr, making the current vary by 70, 103, 125 and 150 A, consequently, the plasma power and temperature.

### Variation of VNG flow rate

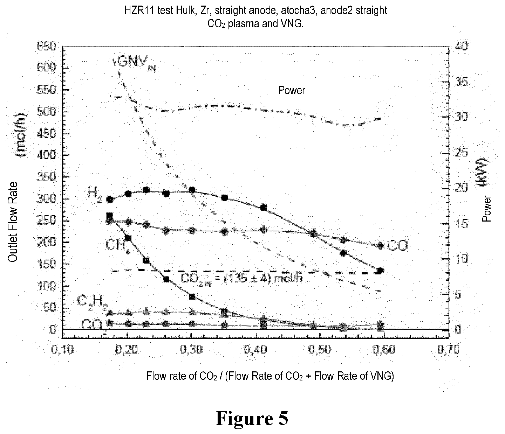

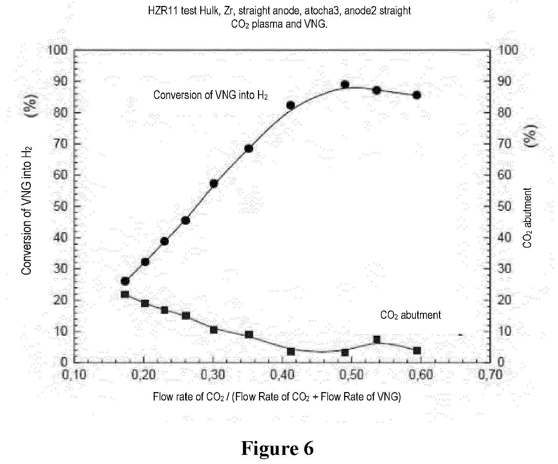

The graphs in Figures 5 to 11 show the results of the test where the current and the flow rate of CO₂, which is the working gas, were kept constant, while the flow rate of the VNG was varied.

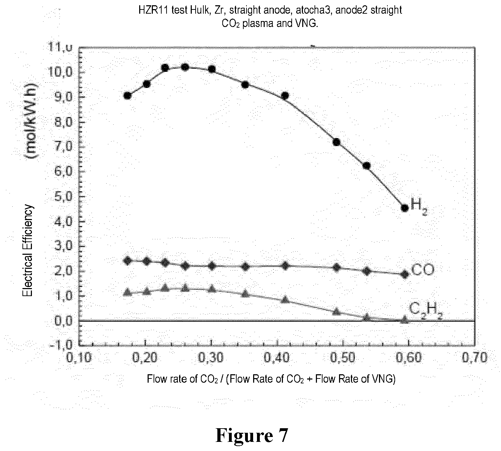

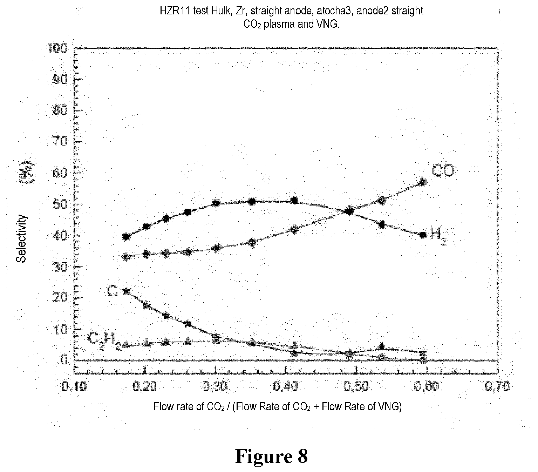

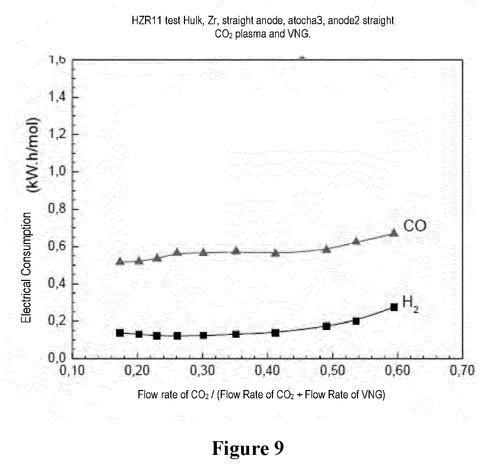

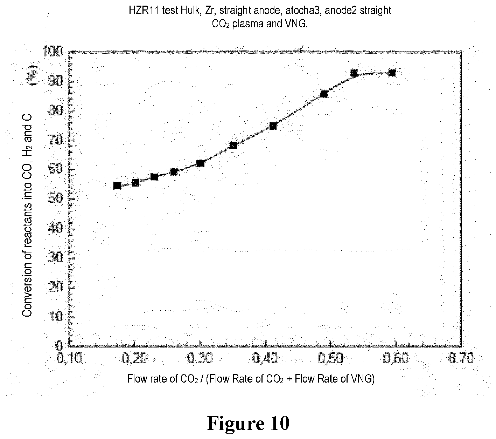

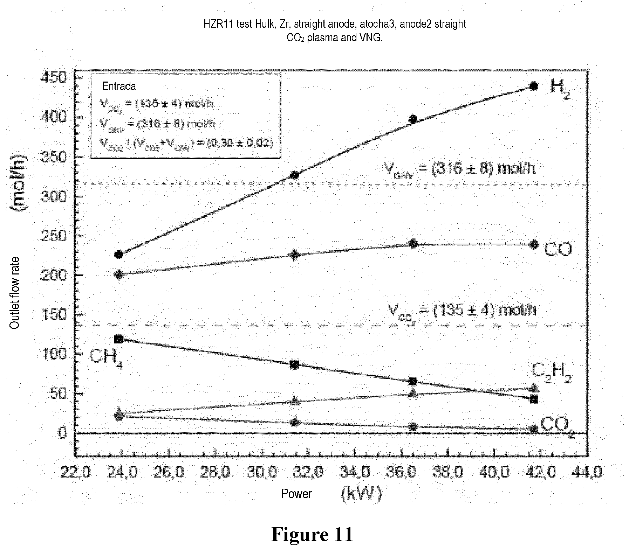

Figure 5 shows a graph with the flow rates of gases entering and leaving the plasma torch, as well as the power for each flow rate of VNG. The arc power increases slightly with the increase in the flow of VNG, the opposite behavior to that found in test 11, where the power decreased due to the increase in pressure at the output of the first anode, caused by the loss of pressure due to the small diameter of the second anode. The flow rate of H₂ reaches a maximum when the flow rate of VNG is approximately 2.3 times the flow rate of CO₂.The same maximum applies to the energy efficiency in the production of H₂ and its selectivity, as can be seen in Figures 8 and 9. Figure 7 shows that for the highest energy efficiency in the production of H₂, the conversion of VNG into H₂ is around 58% and the CO₂ abutment at 10%. Figure 10 shows that the electrical consumption for the production of H₂ is much lower than that of CO. For the condition of maximum energy efficiency in the production of H₂, the percentage of conversion of reagents into CO, H₂ and carbon was 60%, and the maximum conversion was 92% for flow rates of VNG lower than the flow rate of CO₂according to Figure 11.

### Variation of plasma power

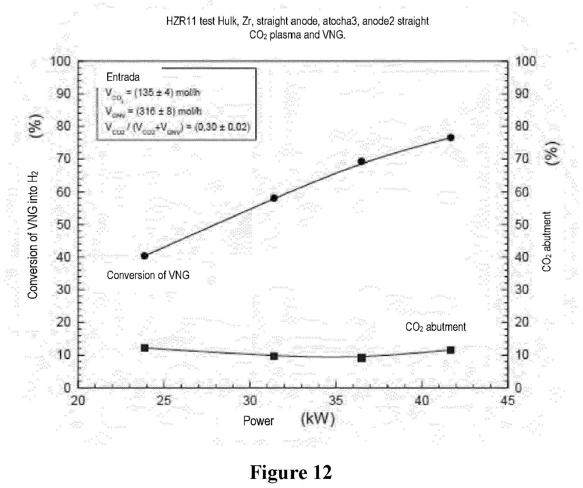

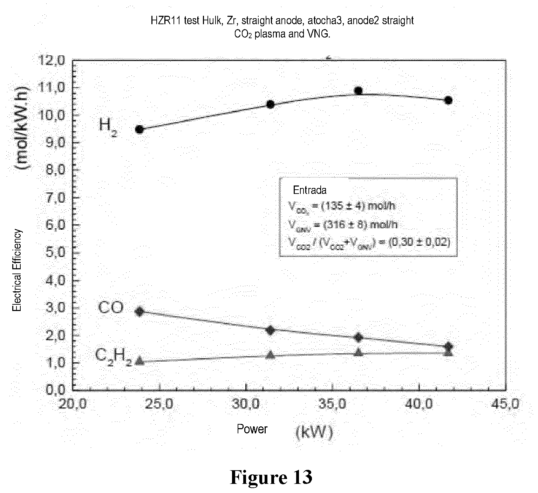

The graphs in figures 12 to 17 were the results of tests with the variation of the plasma power, via the variation of the electric arc current, where the ratio between the flow rates of VNG and CO₂ corresponded to the maximum energy efficiency in the production of H₂, for the ratio [flow rate of CO₂/(flow rate of CO₂ + flow rate of VNG)] = 0.30. The graph in Figure 12 shows the flow rate of reactant gases and products, where it is observed that the increase in power reduced the residual flow rates of CH₄ and CO₂. As for the products, there was a slight increase in the flow rates of C₂H₂ and CO, with an increase in the H₂ flow rate much greater. Figure 13 shows that the conversion of VNG into H₂ varied from 40 to 77%, in the range of power explored, and the behavior of the curve indicates that this result may be greater for higher powers. This graph also signals that the CO₂ abutment should increase with the increase in plasma power.

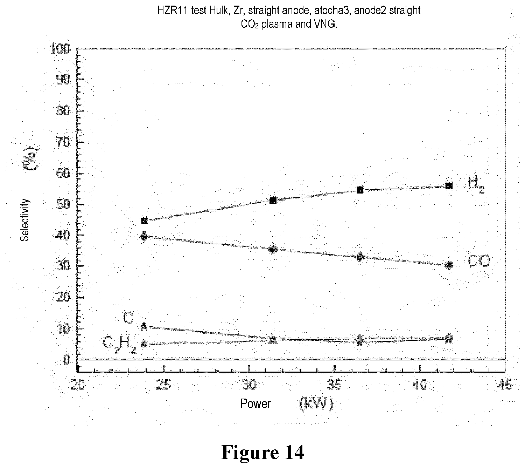

Figure 14 shows the energy yield for the products, which decreases for CO, increases continuously for C₂H₂ and goes through a maximum for H₂. This drop in performance may be associated with the characteristic curve of the plasma, which with increasing current, the arc voltage decreases, followed by a decrease in the length of the electric arc, causing the plasma torch to leave the maximum performance point. Thus, for the plasma torch to continue operating at maximum efficiency, it is necessary to increase the flow rate of CO₂, so that the arc voltage returns to the initial value and, consequently, the arc length.

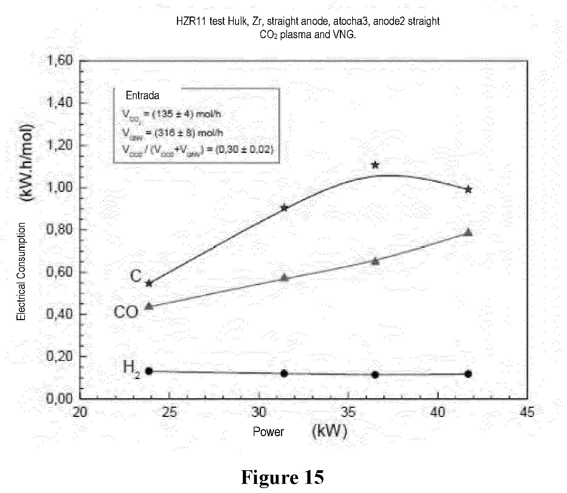

The selectivity graph, shown in Figure 15, shows that the increase in power favors the formation of H₂, decreases the formation of CO, with little variation in the flow rate of C₂H₂ and carbon.

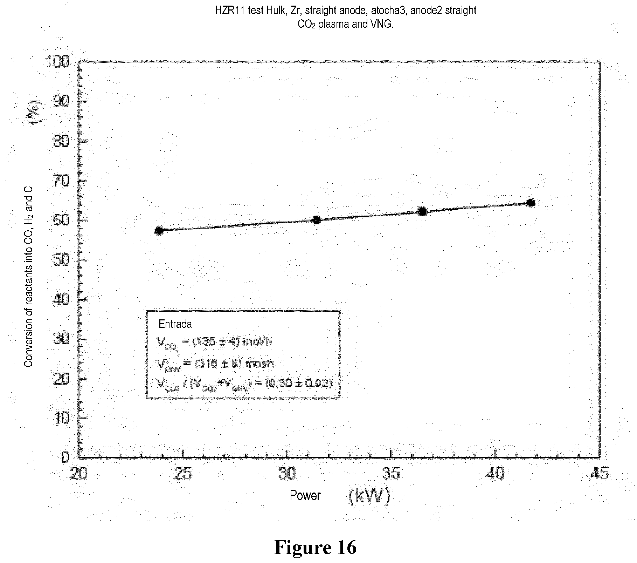

The electrical consumption for H₂, shown in Figure 16, indicates an almost imperceptible reduction with increasing power, while increasing for CO and going through a maximum for carbon.

The graph in Figure 17 shows that the increase in plasma power increases the percentage of conversion of reagents to CO, H₂ and carbon.

The description that has been made so far of the object of present invention should be considered only as a possible or possible embodiments, and any particular characteristics introduced therein should be understood only as something that has been written to facilitate understanding. Therefore, they cannot in anyway be considered as limiting the present invention, which is limited to the scope of the following claims.

## Claims

1. Plasma reactor for the production of synthesis gas, **characterized by** comprising:
a torch comprising straight or step anode;
anode and/or cathode diameter in the range between 2 mm and 100 mm, plasma power between 1 and 6,000 kW.

2. Reactor, according to claim 1, **characterized by** having gas outlet flow rates in the range between 2 and 60,000 mol/h

3. Reactor, according to claim 1 or 2, **characterized by** comprising electrodes selected from the group consisting of copper and zirconia.

4. Reactor according to claim 3, **characterized by** comprising zirconia cathode.

5. Reactor, according to any one of claims 1 to 4, **characterized in that** it allows the injection of gases in the region of the anode and/or cathode.

6. Process for the production of synthesis gas, **characterized by** comprising the reform of natural gas and/or light hydrocarbons through the following steps:
injecting CO₂ in the region of cathode, and CH₄ at the anode outlet of a reactor as defined in claim 1 with a gas flow rate,
in which the gas outlet flow rate is in the range between 2 and 60,000 mol/h
where the power is in the range between 1 to 6,000 kW.

7. Process, according to claim 6, **characterized in that** the conversion of CO₂ is in the range between 50 and 100%.

8. Process, according to claim 6 or 7, **characterized by** using electric arc current in the range between 20 and 250 A.
